# FASCICULE DE BREVET EUROPEEN

(11) **EP 0 762 998 B1**
(45) Date de publication et mention de la délivrance du brevet: **28.11.2001**
(21) Numéro de dépôt: 96906809.7
(22) Date de dépôt: 08.03.1996
(51) Int. Cl.: C04B 41/90, F27D 1/00, F27D 5/00

(54) **OUTILLAGES UTILISANT DES MATERIAUX COMPOSITES THERMOSTRUCTURAUX CONTENANT DU CARBONE POUR DES INSTALLATIONS DE TRAITEMENT THERMIQUE ET/OU THERMOCHIMIQUE**
GERÄTE ENTHALTEND THERMOSTRUKTURELLE VERBUNDMATERIALEN MIT KOHLENSTOFF FÜR VORRICHTUNGEN FÜR THERMISCHE UND/ODER THERMOCHEMISCHE BEHANDLUNGEN
IMPLEMENTS USING CARBON-CONTAINING HEAT-RESISTANT COMPOSITE MATERIALS FOR THERMAL AND/OR THERMOCHEMICAL PROCESSING FACILITIES

(30) Priorité: 08.03.1995 FR 9502697
(43) Date de publication de la demande: 19.03.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: MAUMUS, Jean-Pierre, F-33150 Cenon (FR); THEBAULT, Jacques, F-33200 Bordeaux (FR)
(74) Mandataire: Joly, Jean-Jacques
(86) Numéro de dépôt international: FR9600373
(87) Numéro de publication internationale: WO9627570

(56) Documents cités:
- EP-A- 0 269 480
- CHEMICAL ABSTRACTS, vol. 114, no. 12, 25 Mars 1991 Columbus, Ohio, US; abstract no. 107765, NAKAMOTO TAKASHI & AL.: "Cast encapsulatted ceramics thermal insulators and their manufacture" XP002004680 & JP,A,02 180 763 (HONDA MOTOR CO., LTD) 13 Juillet 1990
- DATABASE WPI Section Ch, Week 8435 Derwent Publications Ltd., London, GB; Class L02, AN 84-217078 XP002004681 & JP,A,59 128 282 ( AISIN SEIKI KK) , 24 Juillet 1984
- DATABASE WPI Section Ch, Week 8524 Derwent Publications Ltd., London, GB; Class A82, AN 85-144586 XP002004682 & JP,A,60 079 945 ( DAIDO TOKUSHUKO KK) , 7 Mai 1985
- DATABASE WPI Section Ch, Week 8735 Derwent Publications Ltd., London, GB; Class L02, AN 87-248023 XP002004683 & JP,A,62 171 969 ( TOSHIBA KK) , 28 Juillet 1987

## Description

La présente invention concerne des outillages utilisant des matériaux composites thermostructuraux contenant du carbone pour des installations de traitement thermique et/ou thermochimique. Par outillages, on entend ici l'ensemble des éléments qui permettent de supporter des produits à traiter dans de telles installations, notamment des soles de four, des plateaux de chargement, des pieds et entretoises supportant des plateaux à différents niveaux, etc.

Les matériaux composites thermostructuraux sont caractérisés par leurs propriétés mécaniques qui les rendent aptes à constituer des éléments de structure et leur capacité à conserver ces propriétés à des températures élevées. Ils trouvent des utilisations diverses, notamment pour des éléments de carénage de véhicules spatiaux, des disques de friction, notamment des disques de freins d'avions, des pièces de tuyères de propulseurs, des pièces de turboréacteurs ou encore des outillages pour fours dans lesquels sont réalisés des traitements à température élevée. Des exemples de matériaux composites thermostructuraux sont les matériaux comprenant un renfort fibreux, ou préforme, en fibres réfractaires (carbone ou céramique) densifié par une matrice également réfractaire (carbone ou céramique), tels que les matériaux composites carbone-carbone, ou C-C (renfort en fibres de carbone et matrice carbone) ou les matériaux composites à matrice céramique ou CMC.

L'utilisation de matériaux composites thermostructuraux, plus particulièrement de matériaux composites C-C pour des outillages destinés à des installations de traitement thermique est décrite en particulier dans le document FR-A-2 677 740.

Par rapport à des outillages métalliques, des outillages en composite C-C présentent les avantages de caractéristiques non dégradées aux températures élevées, notamment absence de fragilité, de fluage et de déformation à ces températures, ainsi qu'une masse sensiblement inférieure offrant un excellent rapport entre le poids des pièces traitées et le poids des outillages.

Toutefois, outre leur coût relativement élevé, les matériaux composites C-C et, plus généralement les matériaux composites thermostructuraux contenant du carbone, peuvent poser des problèmes dans certaines utilisations.

Ils présentent en effet un état de surface caractérisé par une certaine rugosité et conservent une porosité résiduelle quel que soit le soin apporté à la densification du renfort fibreux par la matrice. En outre, les composites C-C sont sensibles à la corrosion par oxydation à partir d'une température de 450°C sous air. Cette sensibilité à l'oxydation existe aussi pour les CMC, soit parce que le renfort fibreux est en fibres de carbone, soit parce qu'une interphase en carbone pyrolytique est formée entre les fibres du renfort et la matrice, de la façon décrite notamment dans le document EP-A-0172 082. En outre, dans le cas où les outillages sont utilisés dans des installations de traitement de produits métalliques, la présence de carbone dans les matériaux thermostructuraux peut entraîner des phénomènes indésirables de carburation des produits traités.

Il est donc souhaitable de remédier à ces inconvénients afin de pouvoir profiter pleinement des avantages offerts par les matériaux composites thermostructuraux et la solution proposée ici consiste à réaliser les outillages sous forme de pièces en matériau composite munies d'un revêtement métallique.

La pièce composite et l'enveloppe métallique pourraient être fabriquées séparément puis assemblées. Toutefois, cette façon de procéder est inenvisageable dans la pratique en raison de la complexité de la réalisation de l'assemblage et de la difficulté de maîtriser le jeu important apparaissant inévitablement aux températures élevées entre la pièce composite et son enveloppe. Une autre possibilité réside dans la formation de l'enveloppe métallique à chaud, par exemple par coulée de métal autour de la pièce composite. Outre le problème posé par la différence entre les coefficients de dilatation thermique de la pièce composite et de l'enveloppe métallique au regard de l'intégrité qu'il est nécessaire de conserver à cette dernière, le contact du métal avec le matériau composite contenant du carbone présente des inconvénients. En effet, notamment lorsque l'enveloppe métallique est en acier, il peut en résulter la formation d'eutectiques avec le carbone de la pièce composite avec pour conséquence indésirable une dégradation du comportement mécanique de l'outillage.

II a bien été proposé dans le document FR-A-2 676 051 de réaliser un revêtement métallique à partir d'un mélange de poudres qui est déposé à la surface d'une pièce et soumis à traitement thermique, mais l'inconvénient principal évoqué ci-dessus des procédés utilisant une réalisation à chaud de l'enveloppe métallique subsiste.

La présente invention a pour but de remédier à ces difficultés en proposant un procédé permettant de revêtir une pièce en matériau composite thermostructural contenant du carbone par une enveloppe métallique avec maîtrise des jeux éventuels entre la pièce et l'enveloppe, maintien de l'intégrité de l'enveloppe métallique en dépit de variations dimensionnelles différentielles d'origine thermique, et empêchement de la formation d'eutectiques entre le métal de l'enveloppe et le matériau composite.

Ce but est atteint grâce à un procédé comprenant les étapes qui consistent à :
- former sur toute la surface extérieure de la pièce en matériau composite une couche d'interposition choisie parmi un matériau réfractaire poreux à porosité fermée et une texture fibreuse aérée en fibres réfractaires munie d'un revêtement étanche vis-à-vis du métal de l'enveloppe, de manière à constituer une barrière de diffusion entre le carbone de la pièce et le métal de l'enveloppe.
- former l'enveloppe métallique par coulée de métal en fusion autour de la pièce munie de la couche d'interposition, le retrait du métal lors du refroidissement étant absorbé par effondrement de la porosité du matériau réfractaire poreux ou affaissement de la texture fibreuse aérée sans destruction de la fonction de barrière de diffusion, de sorte que l'intégrité de l'enveloppe métallique peut être préservée tout en empêchant un contact direct entre le métal de l'enveloppe et le matériau composite thermostructural.

Différents produits peuvent être utilisés pour former au moins en partie la couche d'interposition. Celle-ci doit assurer une fonction de moule lors de la coulée du métal, doit présenter une porosité capable de s'effondrer ou s'affaisser sous l'effet de la contraction du métal lors de son refroidissement, sans engendrer de contraintes de traction ou de compression rédhibitoires pour l'enveloppe métallique, de sorte qu'elle conserve son intégrité, et doit constituer une barrière de diffusion tant vis-à-vis du métal de l'enveloppe vers le matériau composite que vis-à-vis du carbone de ce dernier vers l'extérieur.

Les matériaux réfractaires poreux utilisables sont par exemple des enduits ou ciments friables, tels qu'un ciment zircone, éventuellement chargé de microbilles creuses, ou microballons, qui présentent une porosité fermée.

Les textures fibreuses aérées utilisables sont par exemple les tresses, les cordelettes et les feutres. Afin de parfaire l'étanchéité vis-à-vis du métal pour éviter une infiltration du métal fondu dans la texture fibreuse et constituer une barrière de diffusion vis-à-vis du métal, un revêtement étanche est formé sur la texture fibreuse. Ce revêtement, éventuellement à porosité fermée, est par exemple en un matériau suffisamment friable pour se briser sous l'effet de la contraction du métal sans perdre son caractère étanche.

L'invention concerne aussi des outillages tels qu'obtenus par le procédé ci-dessus, c'est-à-dire des outillages comprenant une pièce en matériau composite thermostructural contenant du carbone, et caractérisés en ce que la pièce en matériau composite est munie d'une enveloppe métallique séparée de la pièce en matériau composite par une couche d'interposition assurant une fonction de barrière de diffusion.

Des exemples de mise en oeuvre de l'invention seront maintenant décrits à titre indicatif mais non limitatif.

Référence sera faite aux dessins annexés sur lesquels :
- la figure 1 est une vue très schématique en coupe montrant la mise en oeuvre d'un procédé conforme à l'invention pour former une enveloppe métallique autour d'une pièce en matériau composite ;
- la figure 2 est une vue très schématique en coupe du produit final obtenu par le procédé de la figure 1 ;
- la figure 3 est une vue très schématique en coupe illustrant la mise en oeuvre d'un autre procédé conforme à l'invention pour former une enveloppe métallique autour d'une pièce en matériau composite ;
- la figure 4 est une vue très schématique en coupe du produit final obtenu par le procédé de la figure 3 ; et
- les figures 5 et 6 sont des vues très schématiques en coupe montrant des variantes de réalisation de la couche d'interposition pour une pièce en matériau composite destinée à être munie d'une enveloppe métallique par un procédé conforme à l'invention.

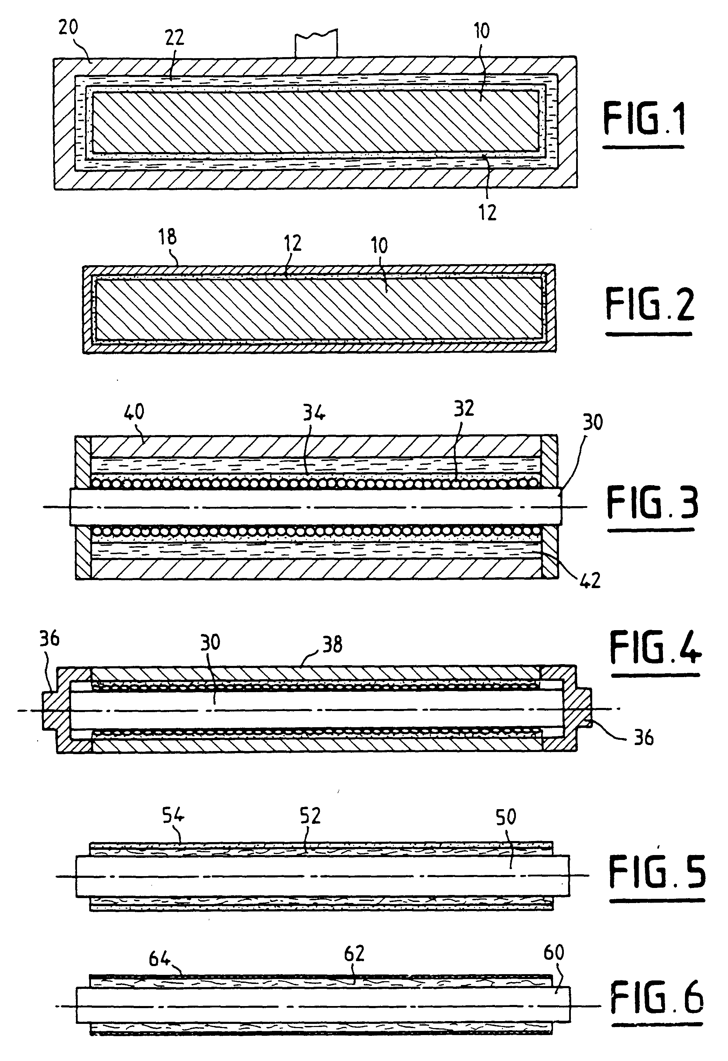

Les figures 1 et 2 montrent une pièce 10 en matériau composite C-C ayant une forme de plaque destinée à constituer un plateau ou un élément de plateau pour un outillage de chargement de produits à traiter dans un four de traitement thermique ou thermochimique. Par traitement thermique, on entend ici un traitement à température élevée, typiquement supérieure à 500°C. Par traitement thermochimique, on entend ici un traitement à température élevée avec modification des produit traités au moins en partie par réaction chimique (par exemple carburation ou nitruration).

Une couche d'interposition 12 en un ciment réfractaire poreux friable à porosité fermée est formée sur toute la surface extérieure de la pièce 10. Des exemples de ciments réfractaires poreux sont notamment les ciments zircone, éventuellement chargés de microbilles creuses, ou microballons. La couche 12 a une épaisseur sensiblement constante.

La pièce 10 munie de la couche d'interposition 12 est placée dans un moule 20 (figure 1). Du métal en fusion 22, par exemple de l'acier, est coulé dans le moule, autour de la pièce 10. Après solidification et refroidissement, le métal 22 constitue une enveloppe métallique 18 entourant complètement la pièce 10 (figure 2). Lors de son refroidissement, le métal en se rétractant, provoque l'écrasement de la couche 12 par effondrement de sa porosité, la couche 12 conservant toutefois sa fonction de barrière de diffusion vis-à-vis du métal de l'enveloppe 18 et du carbone de la pièce 10, de sorte qu'une formation éventuelle d'eutectiques par réaction entre le métal de l'enveloppe et, par exemple, le carbone du matériau composite est évitée.

Le degré de porosité et l'épaisseur de la couche 12 sont choisis de manière que la réduction de volume de cette couche sous l'effet de la contraction du métal n'engendre pas de contraintes susceptibles d'affecter l'intégrité de la pièce composite 10 et de l'enveloppe métallique 18 et laisse subsister une couche intermédiaire suffisante pour assurer la fonction de barrière de diffusion. Ce choix permet aussi de maîtriser le jeu résiduel entre la pièce composite et l'enveloppe métallique.

A titre indicatif, pour une pièce composite cylindrique de diamètre 18 mm et longueur 600 mm, une couche d'interposition de 0,25 mm d'épaisseur, donc relativement épaisse, a été réalisée en ciment zircone dont la porosité en volume représente 50 % du volume apparent du matériau poreux.

Un autre mode de réalisation de l'invention est illustré par les figures 3 et 4.

La pièce en matériau composite 30 est un barreau cylindrique à section circulaire en composite C-C destiné à constituer une entretoise dans un outillage de chargement de four. La pièce 30 est munie d'une couche d'interposition sous forme d'une tresse 32 en fibres de carbone munie à l'extérieur d'un revêtement étanche en matériau réfractaire 34.

La pièce 30 munie de la couche d'interposition est placée dans un moule 40 (figure 3) dans lequel est coulé du métal en fusion 42, par exemple de l'acier. On note que le moule 40 définit un espace pour la coulée du métal autour de la pièce 30 à l'exception de ses extrémités. Après solidification et refroidissement, le métal 42 constitue une enveloppe métallique 38 entourant la pièce 30 (figure 4). Lors de son refroidissement, le métal, en se rétractant, provoque la contraction de la tresse 32, par affaissement de sa porosité, et l'écrasement du revêtement 34. Ce dernier est avantageusement en un matériau friable tel qu'un enduit ou un ciment réfractaire poreux à porosité fermée du même type que celui utilisé dans le mode de réalisation de la figure 1 conservant son étanchéité vis-à-vis du métal après écrasement. Le revêtement réfractaire 34 assure l'étanchéité de la couche d'interposition vis-à-vis du métal en fusion. Il protège aussi la tresse 32 en fibres de carbone du contact avec le métal fondu et empêche l'infiltration de celui-ci au sein de la texture fibreuse, infiltration qui aurait pour effet indésirable de combler au moins en partie la porosité. Le revêtement réfractaire 34 assure aussi le rôle de barrière de diffusion du métal vers le carbone et évite ainsi une possible formation d'eutectiques lors de l'utilisation de l'élément d'outillage.

L'enveloppe métallique 38 est complétée par des boudoirs métalliques 36 qui ferment le barreau à ses extrémités et sont soudés aux extrémités de l'enveloppe 38.

Des textures fibreuses autres que des tresses peuvent être utilisées. Ainsi, la figure 5 montre une pièce 50 en forme de barreau cylindrique munie à sa périphérie d'une couche d'interposition constituée par un feutre 52 muni à l'extérieur d'un revêtement 54 en matériau réfractaire étanche vis-à-vis du métal. Le feutre 52 est en fibres réfractaires, par exemple des fibres de carbone, de graphite ou de céramique.

En outre, le revêtement étanche de protection de la texture fibreuse et de la pièce composite vis-à-vis du métal fondu peut être autre qu'un enduit ou ciment réfractaire. La figure 6 montre une pièce 60 munie à sa périphérie d'une couche d'interposition constituée par une texture fibreuse 62 munie à l'extérieur d'un revêtement 64 formé par un feuillard métallique. Le revêtement 64 est en métal réfractaire, par exemple du molybdène, capable de se déformer aisément sous l'effet de la rétractation du métal de l'enveloppe sans enduire de contraintes capables d'affecter l'intégrité de celle-ci, et sans perdre sa propre intégrité afin d'assurer la fonction de barrière de diffusion.

## Revendications

1. Procédé pour la réalisation d'outillages comportant une pièce en matériau composite thermostructural contenant du carbone munie d'une enveloppe métallique, pour des installations de traitement thermique et/ou thermochimique, comprenant les étapes qui consistent à :
- former sur toute la surface extérieure de la pièce en matériau composite thermostructural une couche d'interposition choisie parmi un matériau réfractaire poreux à porosité fermée et une texture fibreuse aérée en fibres réfractaires munie d'un revêtement étanche vis-à-vis du métal de l'enveloppe, de manière à constituer une barrière de diffusion entre le carbone de la pièce et le métal de l'enveloppe, et
- former l'enveloppe métallique par coulée du métal en fusion autour de la pièce munie de la couche d'interposition,
- le retrait du métal lors du refroidissement étant absorbé par effondrement de la porosité du matériau réfractaire poreux ou affaissement de la texture fibreuse aérée sans destruction de la fonction de barrière de diffusion, de sorte que l'intégrité de l'enveloppe métallique peut être préservée tout en empêchant un contact direct entre le métal de l'enveloppe et le matériau composite thermostructural.

2. Procédé selon la revendication 1, **caractérisé en ce que** l'on forme une couche d'interposition comprenant une texture fibreuse réfractaire sous forme de tresse.

3. Procédé selon la revendication 1, **caractérisé en ce que** l'on forme une couche d'interposition comprenant une texture fibreuse réfractaire sous forme de feutre.

4. Procédé selon l'une quelconque des revendications 1 à 3, **caractérisé en ce que** l'on forme une couche d'interposition comprenant un revêtement réfractaire en un matériau réfractaire friable.

5. Procédé selon l'une quelconque des revendications 1 à 3, **caractérisé en ce que** l'on forme une couche d'interposition comprenant un revêtement réfractaire sous forme d'un feuillard métallique.

6. Outillage pour une installation de traitement thermique et/ou thermochimique, comprenant une pièce en matériau composite thermostructural contenant du carbone,
**caractérisé en ce que** la pièce en matériau composite (10 ; 30 ; 50 ; 60) est munie d'une enveloppe métallique (18 ; 38) dont elle est séparée par une couche d'interposition (12 ; 32 ; 34 ; 52 ; 54 ; 62 ; 64) choisie parmi une couche de matériau réfractaire à porosité fermée effondrée et une texture fibreuse en fibres réfractaires munie d'un revêtement étanche, ladite couche d'interposition formant barrière de diffusion entre le carbone de la pièce et le métal de l'enveloppe.

7. Outillage selon la revendication 6, **caractérisé en ce que** la couche d'interposition (62, 64) comprend un revêtement étanche sous forme d'un feuillard métallique.

## Claims

1. A method of making tooling including a part of thermostructural composite material containing carbon and provided with a metal case, for installations for heat treatment and/or thermochemical treatment, the method comprising the following steps:
- forming over the entire outside surface of the part of thermostructural composite material an interposition layer selected from a porous refractory material having closed porosity and an air-containing fiber fabric made of refractory fibers and provided with a covering that is airtight with respect to the metal of the case, so as to form a diffusion barrier between the carbon of the part and the metal of the case; and
- forming the metal case by casting molten metal around the part provided with the interposition layer,
- the shrinking of the metal during cooling being absorbed by collapsing of the porosity of the porous refractory material or compacting of the air-containing fiber fabric, without destroying the diffusion barrier function, thereby preserving the integrity of the metal case while preventing any direct contact between the metal of the case and the thermostructural composite material.

2. A method according to claim 1, **characterized in that** an interposition layer is formed which comprises a refractory fiber fabric in the form of a braid.

3. A method according to claim 1, **characterized in that** an interposition layer is formed which comprises a refractory fiber fabric in the form of a felt.

4. A method according to any one of claims 1 to 3, **characterized in that** an interposition layer is formed which comprises a refractory covering made of a friable refractory material.

5. A method according to any one of claims 1 to 3, **characterized in that** an interposition layer is formed which comprises a refractory covering in the form of a metal foil.

6. Tooling for an installation for heat treatment and/or thermochemical treatment, the tooling comprising a part made of thermostructural composite material containing carbon, the tooling being **characterized in that** the composite material part (10; 30; 50; 60) is provided with a metal case (18; 38) from which it is separated by an interposition layer (12; 32; 34; 52; 54; 62; 64) selected from a layer of refractory material having collapsed closed porosity and a fiber fabric made of refractory fibers provided with an airtight covering, said interposition layer forming a diffusion barrier between the carbon of the part and the metal of the case.

7. Tooling according to claim 6, **characterized in that** the interposition layer (62, 64) comprises an airtight covering in the form of a metal foil.

## Patentansprüche

1. Verfahren zur Herstellung von Vorrichtungen, die ein Teil aus Kohlenstoff enthaltendem, bei erhöhter Temperatur tragfähigem Verbundmaterial aufweisen, das mit einer metallischen Ummantelung ausgestattet ist, für Anlagen zur thermischen und/oder thermochemischen Behandlung, die folgenden Schritte aufweisend:
- Ausbilden einer Zwischenschicht, die ausgewählt ist aus einem hitzebeständigen, geschlossenporig-porösen Material und einem luftigen Fasergefüge aus hitzebeständigen Fasern, das mit einem gegenüber dem Metall der Umhüllung undurchlässigen Belag ausgestattet ist, dergestalt, daß sie eine Diffusionsbarriere zwischen dem Kohlenstoff des Teils und dem Metall der Ummantelung darstellt, auf der gesamten Außenoberfläche des Teils aus bei erhöhter Temperatur tragfähigem Verbundmaterial und
- Ausbilden der metallischen Ummantelung durch Gießen des schmelzflüssigen Metalls um das mit der Zwischenschicht ausgestattete Teil herum,
- wobei das Schrumpfen des Metalls beim Abkühlen durch Kollabieren der Porosität des hitzebeständigen porösen Materials oder durch Nachgeben des luftigen Fasergefüges ohne Zerstörung seiner Wirkung als Diffusionsbarriere ausgeglichen wird, dergestalt, daß die Unversehrtheit der metallischen Ummantelung bewahrt werden kann, wobei ein direkter Kontakt zwischen dem Metall der Ummantelung und dem bei erhöhter Temperatur tragfähigen Verbundmaterial verhindert wird.

2. Verfahren nach Anspruch 1,
**dadurch gekennzeichnet,**
**daß** eine Zwischenschicht ausgebildet wird, die ein hitzebeständiges Fasergefüge in Form eines Geflechts aufweist.

3. Verfahren nach Anspruch 1,
**dadurch gekennzeichnet,**
**daß** eine Zwischenschicht ausgebildet wird, die ein hitzebeständiges Fasergefüge in Form von Filz aufweist.

4. Verfahren nach einem der Ansprüche 1 bis 3,
**dadurch gekennzeichnet, daß**
eine Zwischenschicht ausgebildet wird, die einen hitzebeständigen Belag aus einem brüchigen hitzebeständigen Material aufweist.

5. Verfahren nach einem der Ansprüche 1 bis 3,
**dadurch gekennzeichnet,**
**daß** eine Zwischenschicht ausgebildet wird, die einen hitzebeständigen Belag in Form eines Metallbands aufweist.

6. Vorrichtung für eine Anlage zur thermischen und/oder thermochemischen Behandlung, aufweisend ein Teil aus Kohlenstoff enthaltendem, bei erhöhter Temperatur tragfähigem Verbundmaterial, **dadurch gekennzeichnet, daß** das Teil aus Verbundmaterial (10; 30; 50; 60) mit einer metallischen Ummantelung (18; 38) ausgestattet ist, von der es getrennt ist durch eine Zwischenschicht (12; 32; 34; 52; 54; 62; 64), die ausgewählt ist unter einer Schicht aus hitzebeständigem Material mit geschlossener, kollabierter Porosität und einem Fasergefüge aus hitzebeständigen Fasern, das mit einem dichten Belag ausgestattet ist, wobei die Zwischenschicht eine Diffusionsbarriere zwischen dem Kohlenstoff des Teils und dem Metall der Ummantelung bildet.

7. Vorrichtung nach Anspruch 6,
**dadurch gekennzeichnet,**
**daß** die Zwischenschicht (64) einen dichten Belag in Form eines Metallbands aufweist.
